# EUROPEAN PATENT SPECIFICATION

(11) **EP 0 794 327 B1**
(45) Date of publication and mention of the grant of the patent: **08.10.2003**
(21) Application number: 97300566.3
(22) Date of filing: 29.01.1997
(51) Int. Cl.: F01P 7/16

(54) **Cooling system for internal combustion engines**
Kühlungssystem für Verbrennungsmotoren
Système de refroidissement pour moteurs à combustion interne

(30) Priority: 06.03.1996 GB 9604780
(43) Date of publication of application: 10.09.1997
(73) Proprietor: Land Rover, Lighthorne, Warwick CV35 0RG (GB)
(72) Inventor: Hutchins, William Richard, Kenilworth, Warwickshire, CV8 1PP (GB)
(74) Representative: Farrow, Robert Michael

(56) References cited:
- US-A- 1 791 756
- PATENT ABSTRACTS OF JAPAN vol. 011, no. 028 (M-557), 27 January 1987 & JP 61 201816 A (DAIHATSU MOTOR CO LTD), 6 September 1986,

## Description

This invention relates to the cooling systems of motor vehicles of the kind in which a heater system for the vehicle utilises heat generated by the engine of the vehicle to provide an energy source for the heater.

It is known to provide a heater system for a vehicle in which waste engine heat from the engine is used to heat air which is fed into a passenger compartment of the vehicle. In such a heater system, a heater circuit normally takes hot coolant from the engine cooling system as it exits the engine, passes it through a suitable heat exchanger and returns it to the engine cooling circuit at a position upstream from an engine-driven pump used to circulate the coolant through the engine cooling circuit. In such an arrangement, the heater circuit bypasses the engine cooling radiator, a combined bypass and flow-controlling thermostat being used to control the flow through the engine cooling radiator and through a bypass circuit which is arranged to bypass the engine cooling radiator.

Since the coolant pump in such a system is driven from the engine, the pump output performance is related to the speed at which the engine is operating and there is a considerable difference in the flow rate and pressure provided by the pump when the engine is idling compared to when it is running at high speed.

A consequence of this variation in pump output is that at low engine speeds, such as when then vehicle is. being driven amongst slow moving traffic, the supply of hot coolant to the heater circuit may be inadequate to heat the air delivered to the vehicle compartment which results in cool, rather than warm air, being supplied.

It is known from JP-A-61-201-816 to provide an engine cooling system for providing an improved heating effect and increasing the speed of cabin heating by providing a check valve in a bypass circuit of a cooling device provided with a thermo-sensitive valve for closing a radiator circuit when the temperature of cooling water is below a given magnitude and opening and closing the check valve by the suction pressure of a water pump, said engine cooling system being of the kind defined in the preamble of claim 1.

It is an object of the present invention to provide a cooling system of the kind referred to in which an improved heater system is less affected by variations in engine speed and which encourages flow of hot coolant into the heater system.

The invention provides a cooling system as defined in claim 1.

In a preferred arrangement the temperature-responsive flow controlling means and the temperature-responsive biasing means include a thermostat and the temperature-responsive flow controlling means also includes a return flow valve, the thermostat being operative to open the return flow valve in response to increasing temperature in the bypass flow arid arranged such that the spring-loading on the bypass valve member increases as the return flow valve becomes opened by the thermostat.

The thermostat may include a thermostat body, a main spring being arranged to act against opening of the return flow valve by movement of the thermostat body, the temperature-responsive biasing means also comprising a secondary spring arranged to act between the bypass valve member and the thermostat body, whereby movement of the thermostat body with increasing temperature both opens the return flow valve against the action of the main spring and increases the spring loading of the secondary spring on the bypass valve member.

The bypass valve and the temperature-responsive flow controlling means may be provided in a combined thermostat and bypass valve assembly, the assembly comprising a housing having a return flow port, a housing outlet and the bypass delivery port, the thermostat body being arranged to operate the return flow valve at the return flow port against the action of the main spring and the bypass valve member being biased towards the bypass delivery port by the secondary spring. Indeed the invention provides a combined thermostat and bypass valve assembly in an engine cooling system as set out in the preceding paragraph and including the bypass valve and the temperature-responsive flow controlling means as set forth in this paragraph.

Since the secondary spring acts between the bypass valve member and the thermostat body, it acts in support of the main spring and the main spring can consequently be of lighter construction than would otherwise be necessary.

The invention will now be described by way of example with reference to the accompanying drawings of which:-
- Fig.1: is a diagrammatic representation of a cooling system for an engine of a motor vehicle and associated heater system according to the invention; and
- Fig. 2: is a cross-sectional view of a combined thermostat and bypass valve assembly of forming part of the cooling system.

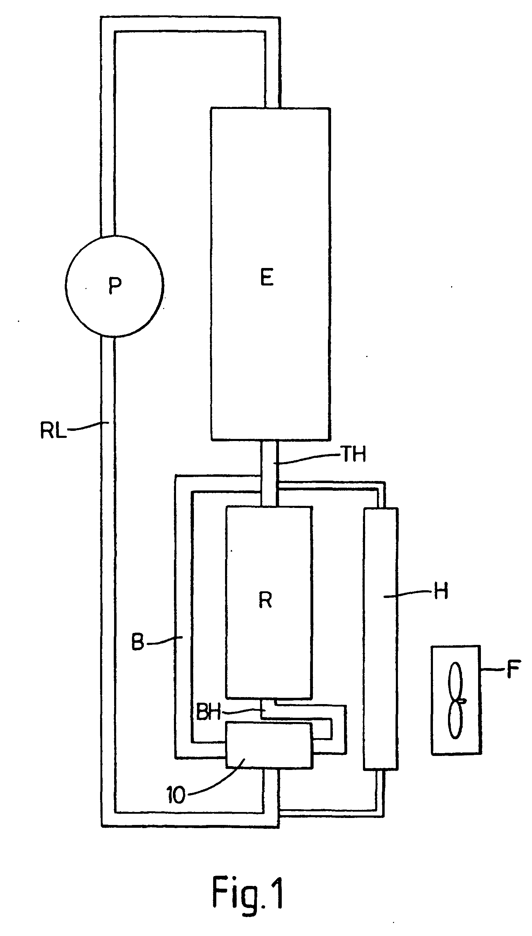

A vehicle engine cooling system, illustrated by Figure 1, comprises an air-cooled radiator R through which a flow of hot coolant is passed through a top hose TH from an engine E.

An engine-driven pump P is located in a return line RL to circulate the coolant around the cooling system. A combined thermostat and bypass valve assembly 10 is positioned between a bottom hose BH leading from the radiator R and the return line RL to control the flow of coolant through the radiator R and a bypass circuit B.

A heater system comprising a fluid to air heat exchanger H and a fan F is associated with a heater circuit of the cooling system and takes a supply of hot coolant from the top hose TH of the cooling circuit, passes it through the heat exchanger H and returns it to the return line RL of the cooling circuit downstream from the combined bypass and thermostat assembly 10. With such an arrangement, the heater circuit bypasses the radiator R, the bypass circuit B and the thermostat assembly 10 to define a distinct but interconnected flow circuit.

The heat exchanger H is of the multiple pass type so as to extract the maximum amount of heat from the hot media passing therethrough for transfer to the air to be heated. However, such a construction inevitably results in a flow path of substantially greater resistance than that through either the radiator R or the bypass circuit B. Therefore whenever the thermostat 10 is operable to allow flow. through either the radiator R or the bypass circuit B the majority of coolant will pass through these circuits to the detriment of the flow through the heat exchanger H. Although this is not a problem when the engine is operating at normal running speeds at lower running speed the flow through the heat exchanger H is so reduced that the performance of the heater system is affected.

To overcome this problem the combined bypass and thermostat assembly is designed as described below to prevent the flow of coolant through the bypass circuit B when the pressure in the bypass circuit B is below a pre-determined level.

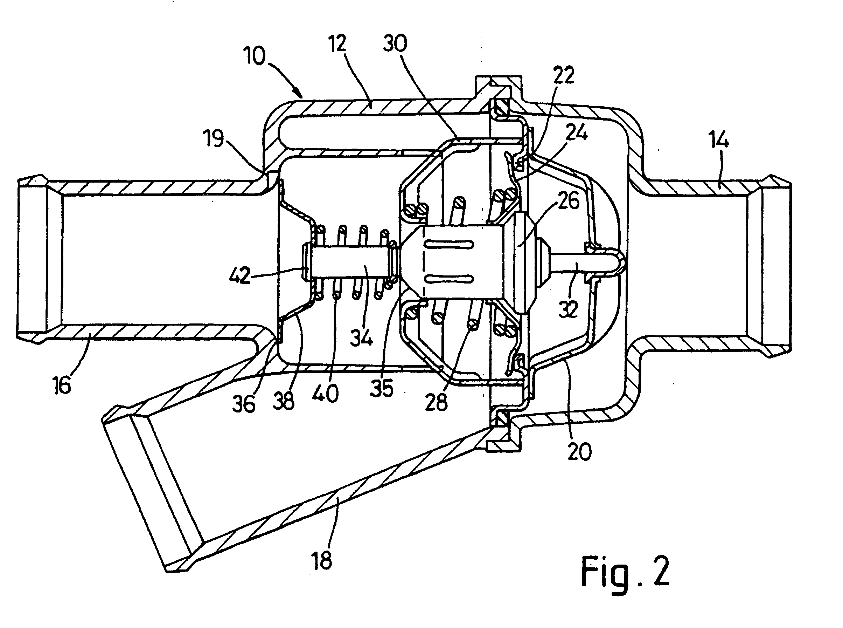

With particular reference to Fig.2 the combined thermostat and bypass assembly comprises a housing 12 defining a chamber, a first fluid flow inlet in the form of a return flow entry tube 14 for connection to -the bottom hose BH from the radiator, a second fluid flow inlet in the form of a bypass flow entry tube 16 for connection to the bypass circuit B, and a fluid outlet in the form of an outlet tube 18 for connection to the return line RL.

A thermostat is mounted within the chamber to control the flow of coolant entering via the return and bypass tubes 14 and 16. The thermostat has a forward bridging frame 20 which is secured at its periphery to the housing 12 and forms an annular seat 22 defining a return flow entry port. A first valve member 24 is secured to a temperature-responsive valve actuating means in the form of a reaction body 26 for abutment against the seat 22 to thereby selectively close the first fluid inlet.

A main coil spring 28 is located upon the reaction body 26 and extends between a rearward frame 30 secured to the forward frame 20 and the valve member 24. The main spring 28 acts to bias the valve member 24 into engagement with the annular seat 22.

The reaction body 26 has a drive pin 32 extending therefrom for engagement with the forward frame 20 and a stud 34 projecting rearwardly towards the bypass entry tube 16. At an inner end of the bypass entry tube 16 the housing forms a seat 36. A bypass valve member 38 is slideably mounted on the stud 34 and is biased towards the seating 36 by a secondary coil spring 40. The length of the stud 34 is sufficient to allow the second valve member 38 to contact the seat 36 even when the first valve is in contact with the annular seat 22. The secondary spring 40 acts between the valve member 38 and a rear end surface 35 of the reaction body 26 and is retained upon the stud 34 by a retaining head 42 at a free end of the stud 34.

The secondary spring 40 has a relatively low spring rate of approximately 0.5kg per mm and is biased against the seating 36 when the main valve 24 is closed to provide approximately a 1.5kg pre-load. The exact spring rate chosen for the secondary spring 40 and the pre-load depend upon the surface area of the valve member 38 and the characteristics of the pump 'P'.

Unlike the combined thermostat and bypass valve assembly described in GB-A-2,290,123 the bypass valve member 38 is able to abut against the bypass seating 36 even when the main valve member 24 is closed.

The assembly as shown in Figure 2 is in a start-up condition, with the main valve 24 closed to prevent the flow of coolant through the radiator 'R'. The bypass valve member 38 is held lightly against the bypass seating 36 by the secondary spring 40 to restrict bypass flow through the bypass circuit 'B'. However, a small amount of flow is allowed to enter the chamber through a bleed passage 19 so as to ensure that the temperature-sensitive reaction body 26 is maintained in coolant corresponding in temperature to that exiting the engine 'E'.

The restriction of the flow through the bypass circuit 'B' encourages flow through the heat exchanger 'H' of the heater circuit thereby improving the performance of the heater.

As the engine speed is increased from idle the pressure in the bypass circuit 'B' increases until when the engine reaches a pre-determined speed the pressure acting on the valve member 38 from the bypass circuit 'B' exceeds the pre-load applied by the secondary spring 40. The valve member 38 will then gradually lift off of the seat 36 thereby allowing coolant to flow through the bypass circuit 'B'.

As the engine speed increases the pressure in the bypass circuit 'B' increases and due to the relatively low spring rate of the secondary spring 40 the valve member is easily moved away from the seat 36 thereby ensuring that there is no risk of the engine being starved of coolant prior to opening of the main valve 24. This is important because a lack of coolant flow through the engine 'E' can result in localised heating and possible engine damage.

By selecting an appropriate spring rate and pre-load for the secondary spring 40 the bypass valve member 38 can be arranged to be held in engagement with the seat 36 up to an engine speed of approximately 1500 R.P.M. and then be fully open at an engine speed of 2000 R.P.M.

After operation of the engine 'E' for a few minutes the temperature of the bypass flow increases thereby causing the reaction body 26 to move the main valve member 24 rearwards away from the annular seat 22 and allow coolant to flow through the radiator 'R'. This will result in a corresponding movement of the rear surface 35 of the reaction body 26 towards the seat 36. This movement acts so as to move the valve member 38 towards the seat 36 thereby reducing or stopping the flow through the bypass circuit 'B'.

When the first valve 24 of the thermostat is in a fully open condition the secondary spring 40 is compressed such that the bypass valve member 38 is held sufficiently firmly against the associated seat 36 that the pressure in the bypass circuit 'B' cannot move the valve member 38 away from the seat 36.

Between the closed and fully open positions, the thermostat and bypass valve assembly, by means of the first valve 24 and the bypass valve 38, distributes the flow of coolant between the bypass circuit 'B' and the radiator 'R' depending upon the temperature of the coolant in the chamber.

It will therefore be appreciated that the bypass valve 38 and the secondary coil spring 40 function as a control means maintaining so far as possible a high flow of coolant through the heater circuit to ensure that a sufficient supply of hot coolant is passed into the heater exchanger to warm the air for the passenger compartment.

## Claims

1. A cooling system for an internal combustion engine (E) of a vehicle comprising cooling means (R) through which a proportion of a hot output flow of coolant from the engine can be passed before being returned to the engine as a cooled return flow, a bypass (B) enabling another proportion of the output flow to be returned to the engine as a bypass flow without passing through the cooling means, temperature-responsive flow. controlling means (10) operative to distribute the proportions of the output flow as between the cooled return flow and the bypass flow and including a thermostat (26) and a return flow valve (24), the thermostat (26) being operative to open the return flow valve in response to increasing temperature in the bypass flow, a heater circuit enabling a further proportion of the output flow to be passed through an air flow heater (H) and returned to the engine as a heater flow, thereby bypassing the cooling means and the bypass, an engine-driven pump (P) to circulate coolant around the cooling system and a bypass valve comprising a bypass valve member (38) spring-loaded into-seating engagement with a bypass delivery port (36) against pressure in the bypass (B) to restrict the bypass flow and thereby encourage the heater flow, **characterised in that** the thermostat (26) is arranged to increase the spring-loading on the bypass valve member (38) as the temperature of the bypass flow increases, said bypass valve member (38) being held by said spring-loading in seating engagement with said bypass delivery port (36) in a start-up condition when said return flow valve (24) is closed to prevent the flow of coolant through said cooling means (R).

2. A cooling system according to claim 1 in which the thermostat includes a thermostat body (26), a main spring (28) being arranged to act against opening of the return flow valve (24) by movement of the thermostat body, the temperature-responsive biasing means also comprising a secondary spring (40) arranged to act between the bypass valve member (38) and the thermostat body, whereby movement of the thermostat body (26) with increasing temperature both opens the return flow valve (24) against the action of the main spring (28) and increases the spring loading of the secondary spring (40) on the bypass valve member (38).

3. A cooling system according to claim 2 in which the bypass valve (38) and the temperature-responsive flow controlling means (24) are provided in a combined thermostat and bypass valve assembly (10), the assembly comprising a housing (12) having a return flow port (22), a housing outlet (18) and the bypass delivery port (36), the thermostat body (26) being arranged to operate the return flow valve (24) at the return flow port (22) against the. action of the main spring (28) and the bypass valve member (38) being biased towards the bypass delivery port (36) by the secondary spring (40).

## Patentansprüche

1. Kühlsystem für einen Verbrennungsmotor (E) eines Fahrzeugs, wobei das Kühlsystem folgendes umfaßt: ein Kühlmittel (R), durch das eine Teilmenge einer heißen Kühlmittelausgangsströmung vom Motor geleitet werden kann, bevor sie als eine gekühlte Rücklaufströmung an den Motor zurückgeleitet wird, einen Bypass (B), der es ermöglicht, eine andere Teilmenge der Ausgangsströmung, ohne sie durch das Kühlmittel zu führen, als eine Bypassströmung an den Motor zurückzuleiten, ein auf Temperatur reagierendes Strömungsregelungsmittel (10), das dazu dient, die Teilmengen der Ausgangsströmung zwischen der gekühlten Rücklaufströmung und der Bypassströmung aufzuteilen, und das einen Thermostaten (26) und ein Rücklaufventil (24) beinhaltet, wobei der Thermostat (26) dazu dient, das Rücklaufventil in Reaktion auf ansteigende Temperatur in der Bypassströmung zu öffnen, einen Heizkreislauf, der es ermöglicht, eine weitere Teilmenge der Ausgangsströmung durch eine Luftströmungsheizung (H) zu leiten und als eine Heizungsströmung zum Motor zurückzuführen, um dadurch einen Bypass um das Kühlmittel und um den Bypass zu schaffen, eine motorangetriebene Pumpe (P), um Kühlmittel im Kühlsystem umzuwälzen, und ein Bypassventil, das ein Bypassventilelement (38) umfaßt, das gegen Druck im Bypass (B) mittels Federbelastung in Sitzeingriff mit einer Bypasszuführungsöffnung (36) gebracht wird, um die Bypassströmung zu beschränken und dadurch die Heizungsströmung zu verstärken, **dadurch gekennzeichnet, daß** der Thermostat (26) dafür ausgelegt ist, die auf das Bypassventilelement (38) einwirkende Federbelastung zu erhöhen, wenn die Temperatur der Bypassströmung zunimmt, wobei das Bypassventilelement (38) durch die Federbelastung in Sitzeingriff mit der Bypasszuführungsöffnung (36) in einem Startzustand gehalten wird, wenn das Rücklaufventil (24) geschlossen ist, um die Kühlmittelströmung durch das Kühlmittel (R) zu verhindern.

2. Kühlsystem nach Anspruch 1, bei dem der Thermostat einen Thermostatkörper (26) und eine Hauptfeder (28) beinhaltet, die so angeordnet ist, daß sie dem Öffnen des Rücklaufventils (24) durch Bewegung des Thermostatkörpers entgegenwirkt, wobei das auf Temperatur reagierende Vorspannmittel auch eine Sekundärfeder (40) umfaßt, die dafür ausgeführt ist, zwischen dem Bypassventilelement (38) und dem Thermostatkörper so zu wirken, daß durch Bewegung'des Thermostatkörpers (26) mit zunehmender Temperatur sowohl das Rücklaufventil (24) gegen die Wirkung der Hauptfeder (28) geöffnet als auch die auf das Bypassventilelement (38) einwirkende Federbelastung der Sekundärfeder (40) erhöht wird.

3. Kühlsystem nach Anspruch 2, bei dem das Bypassventil (38) und das auf Temperatur reagierende Strömungsregelungsmittel (24) in einer kombinierten Thermostat- und Bypassventileinheit (10) vorgesehen sind, wobei die Einheit ein Gehäuse (12) mit einer Rücklauföffnung (22), einem Gehäuseauslaß (18) und der Bypasszuführungsöffnung (36) umfaßt, wobei der Thermostatkörper (26) dafür ausgeführt ist, das Rücklaufventil (24) an der Rücklauföffnung (22) gegen die Wirkung der Hauptfeder (28) zu betätigen, und wobei das Bypassventilelement (38) durch die Sekundärfeder (40) zur Bypasszuführungsöffnung (36) hin vorgespannt ist.

## Revendications

1. Système de refroidissement pour un moteur à combustion interne (E) d'un véhicule comprenant un moyen de refroidissement (R) à travers lequel une proportion d'un écoulement de liquide de refroidissement chaud sortant du moteur peut passer avant d'être renvoyé au moteur en tant qu'écoulement de retour refroidi, une dérivation (B) permettant à une autre proportion de l'écoulement de sortie d'être renvoyé au moteur en tant qu'écoulement de dérivation sans passer à travers le moyen de refroidissement, un moyen de contrôle d'écoulement réagissant à la température (10) agissant pour distribuer les proportions de l'écoulement de sortie entre l'écoulement de retour refroidi et l'écoulement de dérivation et comprenant un thermostat (26) et un clapet de régulation de retour (24), le thermostat (26) agissant pour ouvrir le clapet de régulation de retour réagissant à l'élévation de la température dans l'écoulement de dérivation, un circuit de chauffage permettant à une autre proportion de l'écoulement de sortie de passer à travers un chauffage à écoulement d'air (H) et de retourner au moteur en tant qu'écoulement de chauffage, contournant de la sorte le moyen de refroidissement et la dérivation, une pompe (P) entraînée par le moteur pour faire circuler le liquide de refroidissement dans le système de refroidissement et une soupape de dérivation comprenant un élément de soupape de dérivation (38) rappelé par ressort dans un engagement de siège avec un orifice d'alimentation de dérivation (36) contre la pression présente dans la dérivation (B) pour imposer une restriction à l'écoulement de dérivation et de la sorte encourager l'écoulement à travers le chauffage, **caractérisé en ce que** le thermostat (26) est agencé pour accroître la charge de ressort sur l'élément de soupape de dérivation (38) en même temps que la température de l'écoulement de dérivation augmente, ledit élément de soupape de dérivation (38) étant maintenu par ledit chargement de ressort dans un engagement de siège avec ledit orifice d'alimentation de dérivation (36) dans une condition de démarrage, quand ledit clapet de régulation de retour (24) est fermé pour éviter l'écoulement de liquide de refroidissement à travers ledit moyen de refroidissement (R).

2. Système de refroidissement selon la revendication 1, dans lequel le thermostat comprend un corps de thermostat (26), un ressort principal (28) étant agencé pour agir contre l'ouverture du clapet de régulation de retour (24) par le mouvement du corps de thermostat, le moyen de rappel réagissant à la chaleur comprenant également un ressort secondaire (40) agencé pour agir entre l'élément de soupape de dérivation (38) et le corps de thermostat, ce par quoi le mouvement du corps de thermostat (26) qui accompagne l'élévation de la température ouvre d'une part le clapet de régulation de retour (24) contre l'action du ressort principal (28) et accroît d'autre part la charge de ressort du ressort secondaire (40) sur l'élément de soupape de dérivation (38).

3. Système de refroidissement selon la revendication 2, dans lequel la soupape de dérivation (38) et le moyen de contrôle de l'écoulement réagissant à la température (24) sont prévus dans un ensemble combiné de thermostat et de soupape de dérivation (10), l'ensemble comprenant un logement (12) ayant un orifice d'écoulement de retour (22), une sortie de logement (18) et l'orifice d'alimentation de dérivation (36), le corps de thermostat (26) étant agencé pour actionner le clapet de régulation de retour (24) à l'orifice d'écoulement de retour (22) contre l'action du ressort principal (28) et l'élément de soupape de dérivation (38) étant rappelé vers l'orifice d'alimentation de dérivation (36) par le ressort secondaire (40).
